(19) Europäisches Patentamt
European Patent Office
Office européen des brevets

(11) **EP 4 270 578 A1**

(12) **EUROPEAN PATENT APPLICATION**

(43) Date of publication:
**01.11.2023 Bulletin 2023/44**

(21) Application number: **22305640.9**

(22) Date of filing: **29.04.2022**

(51) International Patent Classification (IPC):
**H01M 10/0562** (2010.01)  **C01G 25/00** (2006.01)
**C04B 41/00** (2006.01)

(52) Cooperative Patent Classification (CPC):
**C01G 25/006; H01M 10/0562;** H01M 2300/0071

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Commissariat à l'Energie Atomique et aux Energies Alternatives**
**75015 Paris (FR)**

(72) Inventor: **TARNOPOLSKIY, Vasily**
**38054 GRENOBLE CEDEX 09 (FR)**

(74) Representative: **Cabinet Nony**
**11 rue Saint-Georges**
**75009 Paris (FR)**

(54) **METHOD FOR PRODUCING A COATED CERAMIC PARTICLE BASED ON A LLZO MATERIAL**

(57)    Method for producing a coated ceramic particle, the method comprising:

a) having at least one base ceramic particle comprising, for at least 90 % of its weight, a LLZO material of formula $Li_xLa_3Zr_yM_zO_{12}$ wherein

$$6 \leq x \leq 7,$$

$$1 \leq y \leq 2,$$

$$0 \leq z \leq 1,$$

and M is chosen in the group consisting in Al, Ga, Nb, Ta, W and their mixtures,

b) covering, at least partially, the base ceramic particle with a liquid component containing a coating agent of formula $AO[OSi(C_mH_{2m+1})_3]_3$, wherein $1 \leq m \leq 20$ and A is chosen in the group consisting in P, Si, B and their mixtures,

c) drying the liquid component such as to form a coating adhering to the surface of the base ceramic particle.

EP 4 270 578 A1

**Description**

The present invention deals with the field of LLZO-based materials, notably intended for producing solid electrolytes.

LLZO are ceramics based on lithium (Li), lanthanum (La), zirconium (Zr) and oxygen (O), usually doped by aluminium (Al) or tantalum (Ta).

LLZO-based materials have been intensively investigated for their high intrinsic ionic conductivity. Furthermore, LLZO-based electrolytes are particularly advantageous with regard to electrochemical stability, high temperature stability and safety.

The main limitation of LLZO-based materials is their high grain-boundary electrical resistance. Hence, so far, known products obtained by cold pressing LLZO powders are substantially non-conductive.

In order to overcome this drawback, different techniques have been proposed.

For instance, "Garnet-Type Solid-State Electrolytes: Materials, Interfaces, and Batteries", C. Wang et al., Chem. Rev. 2020, 120, 4257-4300, doi: 10.1021/acs.chemrev.9b00427 teaches a production of a solid electrolyte by sintering and hot-pressing. When manufacturing a solid cell containing a LLZO based solid electrolyte, this requires heat treatment of the solid cell components at a temperature greater than 1000°C during the solid cell assembly. However, this induces unwanted reactions between the LLZO and the material constitutive of the cathode.

KR10-2017-0092262 A1 teaches a solid electrolyte layer comprising a conductive polymer, a LLZO and a lithium salt. Unfortunately, this solution suffers from low ionic conductivity of polymeric components.

Therefore, there is a need for a LLZO-based material that alleviates the hereabove problems. More particularly, there is a need for LLZO-based material which can be processed by cold pressing to obtain a material with high ionic conductivity.

The present invention relates to a method for producing a coated ceramic particle, the method comprising:

a) having at least one base ceramic particle comprising, for at least 90 % of its weight, a LLZO material of formula $Li_xLa_3Zr_yM_zO_{12}$ wherein

$$6 \le x \le 7,$$

$$1 \le y \le 2,$$

$$0 \le z \le 1,$$

and M is chosen in the group consisting in Al, Ga, Nb, Ta, W and their mixtures,

b) covering, at least partially, the base ceramic particle with a liquid component containing a coating agent of formula $AO[OSi(C_mH_{2m+i})_3]_3$ wherein $1 \le m \le 20$ and A is chosen in the group consisting in P, Si, B and their mixtures,

c) drying the liquid component such as to form a coating adhering to the surface of the base ceramic particle.

Unexpectedly, the inventors have found that a coated ceramic particle obtained by the method according to the invention has a high surface ionic conductivity. The coated ceramic particle can be cold pressed to manufacture a solid electrolyte having a low grain-boundary resistance providing a fast Li-ions transport. Without being bound by any theory, the inventors believe that the contact area between the cold pressed particles is enhanced by the coating ductility. Furthermore, advantageously, the method does not affect the LLZO structure of the base ceramic material, which remains unchanged.

The invention also relates to a coated ceramic particle, preferably obtained by the method according to the invention, the coated ceramic particle comprising:

- a base ceramic particle comprising, for at least 90 % of its weight, a LLZO material of formula $Li_xLa_3Zr_yM_zO_{12}$ wherein

$$6 \le x \le 7,$$

$$1 \le y \le 2,$$

$$0 \le z \le 1,$$

and M being chosen in the group consisting in Al, Ga, Nb, Ta, W and their mixtures,

- a coating adhering to the surface of the base ceramic particle and covering at least partially the base ceramic particle, said coating comprising more than 40 % of groups chosen among phosphate groups, silicate groups, borate groups and their mixtures, and less than 60 % of organic groups, expressed in percentages as a mole number based on the sum of the number of moles of the phosphate groups, the silicate groups, the borate groups and the organic groups of the coating.

The invention also relates to a powder comprising, or even consisting of, the coated ceramic particles according to the invention and/or obtained by the method according to the invention.

The base ceramic particle can comprise 10 % at most of impurities, notably $La_2Zr_2O_7$.

The coefficient x can be greater than or equal to 6.2 and/or lower than or equal to 6.7. The coefficient y can be greater than or equal to 1.3 and/or lower than or equal to 2.

Preferably, the coefficient z is greater than 0. In particular, the coefficient z can be greater than or equal to 0.2 and/or lower than or equal to 0.7.

Preferably, the LLZO material is chosen among $Li_{6.25}La_3Zr_2Al_{0.25}O_{12}$, $Li_{6.4}La_3Zr_{1.4}Ta_{0.6}O_{12}$, $Li_{6.4}La_3Zr_2Ga_{0.2}O_{12}$, $Li_{6.5}La_3Zr_{1.5}Nb_{0.5}O_{12}$, $Li_{6.3}La_3Zr_{1.65}W_{0.35}O_{12}$ and their mixtures.

In particular, the base ceramic particle has a size ranging between 0.1 $\mu m$ and 30 $\mu m$.

Conventionally, the "size" of a base ceramic particle corresponds to the minimum mesh of a standard sieve through which said grain can pass. The "size" of a particle can also be the size given conventionally by characterization of the grain size distribution carried out with a laser granulometer.

The base ceramic particle can be in the shape of a bead. A bead has a sphericity, that is to say a ratio between its smallest diameter and its largest diameter, greater than or equal to 0.6, even greater than 0.7, even greater than 0.8, more preferably greater than 0.9.

The lithium atoms can be present in the form of oxides. In a preferred embodiment, the base ceramic particle is free of standard surface contaminants. Preferably, it is free of $Li_2CO_3$ and LiOH, adhering its surface. Such lithium-based molecules act as impurities that compromise the grafting of functional groups to the surface of base ceramic particles and lower the electrical performance of the coated ceramic particles.

Preferably, the base ceramic particle is produced in an inert atmosphere. An "inert atmosphere" does not react with the LLZO material. The inert atmosphere is preferably a $H_2O$-free and $CO_2$-free atmosphere, for instance in dry nitrogen, dry argon or dry oxygen.

Preferably, after being manufactured and before step b), the base ceramic particle is stored in the inert atmosphere, to limit the formation of lithium-based surface impurities.

The manufacture of a LLZO ceramic particle is well known in the art. It is described for instance in S. Ramakumar et al., Progress in Materials Science 88 (2017) 325-411, doi.org/10.1016/j.pmatsci.2017.04.007.

The coating agent is of formula AO $[OSi(C_mH_{2m+1})_3]_3$.

The coefficient m can be such as $1 \le m \le 10$. The coefficient m can be lower than or equal to 3, in particular lower than or equal to 2. Preferably, m is equal to 1.

A is chosen in the group consisting in phosphorus (P), silicon (Si), boron (B) and their mixtures. Notably, A can be P or Si or B. Preferably, A is phosphorus P.

Preferably, the coating agent is tris(trimethylsilyl) phosphate of formula $PO[OSi(CH_3)_3]_3$.

Preferably, the liquid component comprises only the coating agent of formula $AO[OSi(C_mH_{2m+1})_3]_3$ as a coating agent.

The liquid component can comprise a solvent, the coating agent being in solution in the solvent. The solution can consist in the solvent and the coating agent.

In particular, the solvent is chosen among organic solvents, preferably chosen among polar aprotic solvents.

The solvent can be chosen among acetonitrile, acetone, dichloromethane, dimethylformamide, dimethylsulfoxide, ethyl acetate, tetrahydrofuran, propylene carbonate and their mixtures. Preferably, the solvent is acetonitrile.

The concentration of the coating agent in the solution can be at least 0.1%.

Alternatively, the liquid component can consist in the coating agent in a liquid form.

At step b), the base ceramic particle is covered preferably entirely with the liquid component.

A suspension comprising several base ceramic particles immersed in the liquid component can be formed. The content of base ceramic particles in the suspension can range between 0.1 % and 90 %, as percentages by weight based on the total weight of the liquid component and of the base ceramic particles.

The covering step can be performed at a temperature ranging between 5 °C and 180 °C, notably between 20°C and 100°C. Preferably, the covering step is performed at 20°C. This ensures a uniform deposition and an optimal adhesion of the coating to the surface of the base ceramic particle during step c).

In particular, the covering step can be performed by mixing the base ceramic particle with the liquid solution containing the coating agent. The mixing can be performed for at least 5 minutes, preferably at least 3 days.

Preferably, at least covering step b) is performed in an inert atmosphere, for instance in a dry argon atmosphere, to prevent the formation of lithium-based surface impurities, in particular to prevent the formation of $Li_2CO_3$ and LiOH.

After covering the base ceramic particle with the liquid component, the coating agent is adsorbed on the base ceramic particle surface and reacts to produce a coating layer. At the end of step b), the base ceramic particle can be covered by a layer comprising the reacted coating agent, notably in the form of chemically bonded functional groups.

Preferably, the method comprises a washing step, performed after the covering step b) and before the drying step c), comprising washing the covered base ceramic particle obtained at the end of step b) with a washing liquid, in particular a solvent, for instance acetonitrile. The washing step allows advantageously to remove non-attached coating agent molecules and other soluble by-products.

The washing step can further comprise centrifugation of the washed covered base layer, such as to separate the covered base layer from the washing liquid, for instance at a spin rate of 14000 rpm for 20 minutes.

Preferably, the method comprises performing at least three washing steps, with preferably each washing step comprising centrifugation of the washed covered base layer.

Preferably, the washing step is performed in inert atmosphere.

Drying at step c) can be performed at a temperature ranging between 20 °C and 1000 °C, preferably between 20 °C and 200 °C. Preferably step c) is performed in vacuum.

Drying is preferably performed until all the solvent is removed from the covered base ceramic particle.

The coating preferably comprises more than 50 %, even more than 60 % of groups chosen among phosphate groups, silicate groups, borate groups and their mixtures, expressed in percentages as a mole number based on the sum of the number of moles of the phosphate groups, the silicate groups, the borate groups and the organic groups of the coating. An "organic group" comprises carbon and hydrogen atoms. In particular, the organic groups can comprise hydrocarbon groups, in particular methyl groups ($CH_3$).

The organic groups lower the electrical properties of the coated particle. The coating preferably comprises less than 50 %, even less than 40 % of organic groups, expressed in percentages as a mole number based on the sum of the number of moles of the phosphate groups, the silicate groups, the borate groups and the organic groups of the coating. Preferably, the coating is devoid of organic groups.

The contents of phosphate groups, silicate groups, borate groups and organic groups of the coating can be measured by energy dispersive X-ray spectroscopy (EDX) in a scanning electron microscope (SEM).

Preferably, the phosphate groups, the silicate groups, the borate groups and the organic groups represent more than 90 % of the weight of the coating.

Preferably, the coating comprises, even consists of, grafted groups, notably trialkylsilyl groups and/or phosphate groups, notably provided by the coating agent molecules.

Preferably, the coating thickness is less than 5 $\mu$m, notably ranges between 1 and 200 nm. The coating thickness can be measured by transmission electron microscopy (TEM). Such a thickness is low enough for the barrier effect to Li-**ions** of the coating to be minimized in a cold pressed electrolyte made from the coated ceramic particles. Furthermore, as the coating agent is free of lithium, such a low thickness eases the coating lithiation provided by the LLZO.

Preferably, the coating covers entirely the base ceramic particle.

In particular, the coated particle can consist of the base ceramic particle and the coating.

Furthermore, the method according to the invention can comprise producing a plurality of coated ceramic particles and pressing said plurality such as to obtain a pressed product.

The invention also relates to a process for manufacturing a product, the process comprising pressing a plurality of coated ceramic particles according to the invention or obtained by the method according to the invention, such as to obtain a pressed product.

The median size of the base ceramic particles of the plurality of coated ceramic particles can range between 0.8 $\mu$m and 2 $\mu$m.

The size distribution of the base ceramic particles of the plurality of coated ceramic particles is for example bimodal, for instance with a first fraction having a size of 0.2 $\mu$m and the second fraction complementary to the first fraction having a size of 2 $\mu$m.

Preferably, the pressed product is a solid electrolyte.

Pressing is performed at a temperature ranging between 20 °C and 300 °C.

Pressing can be performed by applying a pressure greater than 100 MPa, in particular ranging between 300 MPa and 600 MPa.

In particular, pressing can be performed on a stacking of at least:

- a first layer comprising a composite cathode material comprising a mixture of a cathode active material and a solid electrolyte which can comprise a portion of the plurality of coated ceramic particles, and optionally an additive for electronic conductivity, notably carbon black;
- a second layer comprising, preferably consisting in, the plurality of coated ceramic particles or if appropriate another portion of said plurality; and
- a third layer comprising an anode material, such as metallic lithium.

For instance, pressing can be performed during the assembly of a solid battery.

Thanks to surface modification resulting from coating of the base ceramic particles, the pressed product presents advantageously a high ionic conductivity. The ionic conductivity can be measured by Electrochemical Impedance Spectroscopy (EIS). In particular, the ionic conductivity of the pressed product is greater than or equal to 1 $\mu$S/cm, and can be greater than or equal to 10 $\mu$S/cm. Without the coating, the typical ionic conductivity of the pressed product, manufactured with similar process conditions, is about 0.01$\mu$S/cm.

The invention further relates to a solid electrolyte obtained by the method according to the invention or by the process according to the invention.

Eventually, it relates to an electrochemical system comprising a solid electrolyte according to the invention. The electrochemical system can be a lithium battery.

The invention should be better understood from a reading of the exemplary and non-limiting following embodiments, and by the examination of the appended drawing, in which:

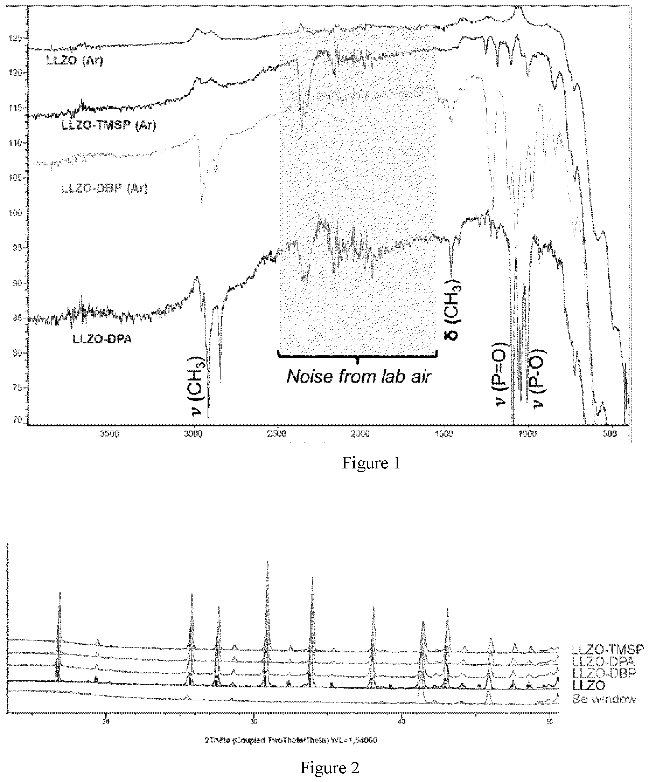

- Figure 1 is a FTIR analysis representing the transmittance, in arbitrary units as a function of the wavenumber in cm$^{-1}$ measured under argon, for a Reference LLZO particle (top curve), Example 1 (top-middle curve), Comparative example 2 (middle curve) and Comparative example 3 (bottom curve).
- Figure 2 is a XRD pattern representing the intensity of the diffracted signal in arbitrary units as a function of the diffraction angle measured under argon, for Example 1 (top curve), Comparative example 3 (second-top curve), Comparative example 2 (middle curve), a powder of Reference LLZO particles (second-bottom curve), and the empty cell without any particle (bottom curve), all the measurements being carried out with Beryllium (Be) window.

## Examples

All experiments presented in the examples have been carried out with LLZO particles of formula $Li_{6.25}La_3Zr_2Al_{0.25}O_{12}$ having a size of 0.1 to 30$\mu$m.

The LLZO particles used in the following examples have been produced and stored in an argon atmosphere.

Example 1 - Coating of LLZO particles with tris(trimethylsilyl) phosphate (TMSP)

All of the following synthesis actions have been carried out in an argon atmosphere.

2 g of LLZO particles were put into a glass bottle with a tight cap. 5 ml of acetonitrile as solvent and 0.94 g of tris(trimethylsilyl) phosphate as a coating agent were added into the bottle. The suspension obtained has been stirred under magnetic stirring at 700 rpm [rotation per minute] for 3 days at 23°C. Every LLZO particle was in contact with the coating agent.

Then, all the thus covered particles have been put into another plastic bottle and have been washed three times with 100 ml of acetonitrile. After each washing, the contaminated acetonitrile was removed by centrifugation during 20 min at 11000 rpm. Between every washing cycle, the bottle was replenished with acetonitrile.

Finally, the covered LLZO particles have been dried at 70°C under vacuum for 3 days until obtaining a solvent-free powder of LLZO particles coated with tris(trimethylsilyl) phosphate.

Comparative Example 2 - Coating of LLZO particles with dibutylphosphate (DBP)

The same procedure has been performed as in Example 1 except that 0.63 g of dibutylphosphate has been used as a coating agent.

A powder of LLZO particles coated with dibutylphosphate has been obtained.

Comparative Example 3 - Coating of LLZO particles with decylphosphonic acid (DPA)

The same procedure has been performed as in Example 1 except that 0.67 g of decylphosphonic acid has been used as a coating agent.

A powder of LLZO particles coated with decylphosphonic acid has been obtained.

The powders obtained in examples 1 to 3 have been characterized with Fourier-transform infrared spectroscopy (FTIR) and X-ray diffraction (XRD) in an argon atmosphere.

As observed on figure 1, by comparison with the non-coated LLZO particles, peaks not related to LLZO are present for the coated particles. They are related to bonding of new grafted groups to the surface of the base LLZO particle. Peaks related to phosphate groups are visible between about 900 and 1200 cm$^{-1}$ for all three modified materials. Besides, peaks are visible between about 2800 and 2900 cm$^{-1}$ in a region typical for CH3 groups after LLZO modification by DBP and DPA, indicating the presence of organic groups. This is not the case for the TMSP-modified material which presents only peaks related to phosphate groups.

Thus, the chemistry of the groups grafted to the surface of the LLZO ceramics is different for LLZO particles coated with tris(trimethylsilyl) phosphate of example 1 compared to the LLZO particles of the comparative examples.

The XRD analysis reported in figure 2 was carried out using an air-tight cell with beryllium window. Accordingly, Be peaks are present in all spectra and have to be ignored. The results of XRD confirm that the peaks of LLZO indicated by vertical rods are equally present in the starting material and in modified samples. This confirms that the LLZO structure has been remained unchanged after implementation of the covering and drying.

Example 4 - Electrolytes

Four electrolytes have been produced by cold pressing respectively the powder of non-coated LLZO and the powders obtained in example 1 to example 3. Cold pressing has been carried out in dry air having a dew point of -50°C under a 400 MPa pressure.

Electrochemical Impedance Spectroscopy (EIS) was carried out on the above obtained cold pressed products to evaluate the impact of the particle coating on the ionic conductivity of the product. The impedance has been measured at stacking pressures of 200 MPa and 400 MPa.

Numerical values of ionic conductivities obtained from EIS are presented in the table below.

|  | LLZO ref | LLZO-DPA | LLZO-DBP | LLZO- TMSP |
|---|---|---|---|---|
| Ionic conductivity at 200 MPa ($\mu$S/cm) | 0,008 | < 10$^{-4}$ | 1,6 $\times$ 10$^{-4}$ | 0,05 |
| Ionic conductivity at 400 MPa ($\mu$S/cm) | 0,011 | < 10$^{-4}$ | 2 $\times$ 10$^{-4}$ | 1,5 |

These results indicate that the coating of LLZO base particle with DPA and DBP have detrimental effect on the ionic conductivity. The inventor believes this phenomenon might be related to the presence of CH$_3$ groups on the surface of the LLZO particles which are believed to act as insulators. On the contrary, the coating of LLZO base particles with TMSP leads to an improvement of the ionic conductivity. This improvement is stronger when the conductivity is measured at higher pressures. It may be related to an increase of the contact surface between coated particle provided by the coating ductility.

Needless to say, the invention is not limited to the embodiments and examples presented in the present description.

Moreover, unless otherwise mentioned, an inequality of the type "A greater than B" or, respectively, "A less than B" is considered strictly. In other words, equality between A and B is excluded.

**Claims**

1. Method for producing a coated ceramic particle, the method comprising:

   a) having at least one base ceramic particle comprising, for at least 90 % of its weight, a LLZO material of formula $Li_xLa_3Zr_yM_zO_{12}$ wherein

$$6 \leq x \leq 7,$$

$$1 \leq y \leq 2,$$

$$0 \leq z \leq 1,$$

and

M is chosen in the group consisting in Al, Ga, Nb, Ta, W and their mixtures,

b) covering, at least partially, the base ceramic particle with a liquid component containing a coating agent of formula $AO[OSi(C_mH_{2m+1})_3]_3$, wherein $1 \leq m \leq 20$ and A is chosen in the group consisting in P, Si, B and their mixtures,

c) drying the liquid component such as to form a coating adhering to the surface of the base ceramic particle.

2. Method according to claim 1, drying being performed at a temperature ranging between 20 °C and 1000 °C, preferably between 20 °C and 200 °C.

3. Method according to anyone claims 1 and 2, the coating agent being tris(trimethylsilyl) phosphate of formula $PO[OSi(CH_3)_3]_3$.

4. Method according to anyone of the preceding claims, at least covering step b) being performed in an inert atmosphere, preferably in $CO_2$-free and $H_2O$-free atmosphere, for instance in a dry argon atmosphere.

5. Method according to anyone of the preceding claims, the liquid component being a solution comprising a solvent, the coating agent being in solution in the solvent, the solvent being chosen among polar aprotic solvents, in particular chosen among acetonitrile, acetone, dichloromethane, dimethylformamide, dimethylsulfoxide, ethyl acetate, tetrahydrofuran, propylene carbonate and their mixtures, preferably being acetonitrile.

6. Method according to anyone of the preceding claims, the covering step being performed at a temperature ranging between 5 °C and 180 °C, preferably between 20 °C and 100 °C.

7. Method according to anyone of the preceding claims, the LLZO material being chosen among $Li_{6.25}La_3Zr_2Al_{0.25}O_{12}$, $Li_{6.4}La_3Zr_{1.4}Ta_{0.6}O_{12}$, $Li_{6.4}La_3Zr_2Ga_{0.2}O_{12}$, $Li_{6.5}La_3Zr_{1.5}Nb_{0.5}O_{12}$, $Li_{6.3}La_3Zr_{1.65}W_{0.35}O_{12}$ and their mixtures.

8. Method according to anyone of the preceding claims, the base ceramic particle having a size ranging between 0.1 $\mu$m and 30 $\mu$m, preferably between 0.1 $\mu$m and 10 $\mu$m.

9. Method according to anyone of the preceding claims, comprising producing a plurality of coated ceramic particles and pressing said plurality, notably by applying a pressure greater than 100 MPa, such as to obtain a pressed product, for instance being a solid electrolyte.

10. Coated ceramic particle, preferably obtained by the method according to anyone of claims 1 to 8, the coated ceramic particle comprising:

- a base ceramic particle comprising, for at least 90 % of its weight, a LLZO material of formula $Li_xLa_3Zr_yM_zO_{12}$ wherein

$$6 \leq x \leq 7,$$

$$1 \leq y \leq 2,$$

$$0 \leq z \leq 1,$$

and

M being chosen in the group consisting in Al, Ga, Nb, Ta, W and their mixtures,

- a coating adhering to the surface of the base ceramic particle and covering at least partially the base ceramic particle, said coating comprising more than 40 % of groups chosen among phosphate groups, silicate groups, borate groups and their mixtures, and less than 60 % of organic groups, expressed in percentages as a mole number based on the sum of the number of moles of the phosphate groups, the silicate groups, the borate groups and the organic groups of the coating.

11. Coated ceramic particle according to the preceding claim, the coating thickness being less than 5 $\mu$m, ranging preferably between 1 and 200 nm.

12. Coated ceramic particle according to anyone of claims 10 and 11, the coating covering entirely the surface of the base ceramic particle.

13. Coated ceramic particle according to anyone of claims 10 to 12, the coating comprising, even consisting of, grafted groups provided by the coating agent molecules.

Figure 1

Figure 2

Europäisches
Patentamt

European
Patent Office

Office européen
des brevets

## EUROPEAN SEARCH REPORT

Application Number

EP 22 30 5640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIA MENGYANG ET AL: "Air-stable dopamine-treated garnet ceramic particles for high-performance composite electrolytes", JOURNAL OF POWER SOURCES, ELSEVIER, AMSTERDAM, NL, vol. 486, 31 December 2020 (2020-12-31), XP086442982, ISSN: 0378-7753, DOI: 10.1016/J.JPOWSOUR.2020.229363 [retrieved on 2020-12-31] * the whole document * | 1-13 | INV.<br>H01M10/0562<br>C01G25/00<br>C04B41/00 |
| X | US 2021/257656 A1 (YERSAK THOMAS A [US]) 19 August 2021 (2021-08-19) * example * | 10 | |
| X | CN 114 122 507 A (REFINER UNIV) 1 March 2022 (2022-03-01) * figures 1-4; examples * | 10-12 | |
| X | CN 110 176 627 A (JINING KELAITAIGE NEW ENERGY TECH CO LTD) 27 August 2019 (2019-08-27) * figure 2; example 1 * | 10-12 | TECHNICAL FIELDS SEARCHED (IPC)<br><br>H01M<br>C01G<br>C04B |

The present search report has been drawn up for all claims

| Place of search | Date of completion of the search | Examiner |
|---|---|---|
| Munich | 21 October 2022 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5640

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2022

| Patent document cited in search report | | Publication date | Patent family member(s) | | Publication date |
|---|---|---|---|---|---|
| US 2021257656 | A1 | 19-08-2021 | CN | 113270637 A | 17-08-2021 |
| | | | DE | 102021101871 A1 | 19-08-2021 |
| | | | US | 2021257656 A1 | 19-08-2021 |
| CN 114122507 | A | 01-03-2022 | NONE | | |
| CN 110176627 | A | 27-08-2019 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170092262 A1

**Non-patent literature cited in the description**

- **C. WANG et al.** arnet-Type Solid-State Electrolytes: Materials, Interfaces, and Batteries. *Chem. Rev.,* 2020, vol. 120, 4257-4300

- **S. RAMAKUMAR et al.** *Progress in Materials Science,* 2017, vol. 88, 325-411